# FASCICULE DE BREVET EUROPEEN

(11) **EP 2 839 863 B1**
(45) Date de publication et mention de la délivrance du brevet: **02.10.2019**
(21) Numéro de dépôt: 14180721.4
(22) Date de dépôt: 12.08.2014
(51) Int. Cl.: A62D 3/176, C08J 11/00, A62D 101/22

(54) **Procédé de désactivation de dérivés bromés contenus dans des matériaux plastiques**
Deaktivierungsverfahren von Bromderivaten, die in Plastikmaterialien enthalten sind
Method for deactivating brominated derivatives contained in plastic materials

(30) Priorité: 13.08.2013 FR 1358000
(43) Date de publication de la demande: 25.02.2015
(73) Titulaire: JULELO, 59000 Lille (FR); Université de Lille, 59800 Lille (FR)
(72) Inventeur: Maschke, Ulrich, 59310 Orchies (FR); Poutch, Franck, 59000 Lille (FR); Khelifi, Skander, 59000 Lille (FR); Debert, Jean-Marie, 59190 Wallon-Cappel (FR); Agguine, Yassine, 40000 Marrakech (MA); Laouedj née Elaziouti, Nadjia, 31000 Oran (DZ); Khouba, Zoulikha, 31000 Oran (DZ); Bouberka, Zohra, 31000 Oran (DZ); Nadim, Abdelouahab, 46300 Youssoufia (MA); Gobert, Patrick, 62620 Maisnil les Ruitz (FR); Evrard, Laura, 62160 Bully les Mines (FR)
(74) Mandataire: Cabinet Plasseraud

(56) Documents cités:
- WO-A1-98/02401
- WO-A1-2012/025771
- DE-A1- 3 903 549
- DE-A1- 4 016 514
- JP-A- 2003 071 422
- JP-A- 2003 311 252
- US-A- 4 144 152
- US-A1- 2007 054 106

## Description

L'invention a pour objet un procédé de désactivation de retardateurs de flamme bromés aromatiques, tels que les polybromobiphényles (PBB) et les polybromodiphényléthers (PBDE), contenus dans des matériaux plastiques.

Les retardateurs de flamme bromés aromatiques au sens de l'invention sont des retardateurs de flammes additifs. Il s'agit de composés bromés aromatiques qui sont ajoutés aux matériaux plastiques avant, pendant ou, plus souvent, après la polymérisation. Ce sont des molécules qui ne sont pas chimiquement liées au matériau et qui réagissent avec les gaz inflammables, ralentissant ou empêchant ainsi la combustion. Font partie de cette catégorie de composés bromés aromatiques par exemple les polybromobiphényles (PBB, aussi appelés diphényles polybromés), les polybromodiphényléthers (PBDE, aussi appelés polybromodiphényléthers), les polybromodiphényléthanes, et les éthylènebis(polybromophthalimides).

Les polybromobiphényles (PBB) et les polybromodiphényléthers (PBDE) sont principalement utilisés comme retardateurs de flammes. Ces produits sont notamment présents dans les composants des équipements électriques et électroniques, notamment les thermoplastiques utilisés par exemple pour les boîtiers et coques, mousses, condensateurs des circuits imprimés et systèmes d'isolation des câbles.

Comme les PBB et les PBDE sont simplement ajoutés aux matériaux plastiques et non liés chimiquement à ceux-ci, ils peuvent migrer dans l'environnement si les déchets les contenant sont déposés en décharge. Les PBB et les PBDE diffusés dans l'environnement ne se détériorent pas facilement et peuvent être absorbés et ingérés par les plantes et les animaux; ils peuvent donc s'accumuler dans la chaîne alimentaire et y persister. Les effets potentiels de ces produits varient principalement en fonction de la quantité absorbée dans le sang, de la durée et de la voie d'exposition. Une exposition aux retardateurs de flammes polybromés peut entraîner un risque important de cancer.

L'incinération des PBB et PBDE n'est pas non plus une solution. En effet, lors de l'incinération de ceux-ci, des sous-produits dangereux, tels que les dioxines et les furannes, sont formés.

La présence de composants dangereux dans les déchets, tels que les déchets des équipements électriques et électroniques, pose un problème majeur durant la phase de gestion des déchets, et le recyclage de ces déchets n'est pas suffisant ou dans certains cas même inexistant. L'absence de recyclage entraîne une perte de ressources précieuses.

En Europe, la directive 2012/19/UE du Parlement Européen et du Conseil relative aux déchets des équipements électriques et électroniques impose que les matériaux plastiques contenant des PBB et PBDE soient séparés et gérés lors de leur fin de vie afin de réduire les risques environnementaux et de santé publique et aussi de ne plus perdre un gisement de matières premières secondaires.

On connait de la demande de brevet US 2001/0044520 un procédé de recyclage de résines comprenant des retardateurs de flammes halogénés dans lequel le retardateur de flammes est extrait de la résine avec un solvant sous haute pression. Un désavantage majeur de ce procédé est qu'il nécessite des quantités importantes de solvant qui doivent être traitées par la suite pour éviter que les composants halogénés soient relâchés dans l'environnement (Development and validation of a congener-specific photodegradation model for polybrominated diphenyl ether; X. Zeng, S. Simonich, K. Robrocks, P. Korytar, L. Alvarez-Cohen and D. Barofsky; Environmental Toxicology and Chemistry; 2008; Vol. 27; pp. 2427-2435 ; Brominated flame retardants in the European chemical policy of REACH regulation and détermination in materiels; S. Kemmlein, D.Harzke and R. Law; Journal of Chromatography A; 2009; Vol. 1216; pp. 320-333 ; UVA/B-induced formation of free radicals from decabromobiphenylether; Y. Suh, G. Buettner, S. Vankataraman, S. Treimer, I. Robertson and G. Ludewig, Environmental Science and Technology, 2009; Vol. 43; pp. 2581-2588).

La demande US 2007/0054106 A1 décrit un procédé de désactivation de retardateurs de flammes bromés contenu dans les matériaux plastiques. Dans ce procédé, le matériau plastique est chauffé à une température prédéterminée de façon à décomposer le retardateur de flammes bromé au moins partiellement en du HBr, puis le HBr est extrait du matériau chauffé. Plus précisément, un mélange de matériaux plastiques est d'abord granulé à une taille de particules moyenne de 9 mm, puis chauffé dans une extrudeuse à une température de 250 à 300°C de façon à décomposer les retardateurs de flammes bromés en du HBr et des organobromures gazeux.

Il existe donc toujours un besoin d'un procédé permettant un traitement efficace des matériaux plastiques contenant des retardateurs de flamme bromés aromatiques, tels que les polybromobiphényles (PBB) et/ou polybromodiphényléthers (PBDE).

Les inventeurs ont maintenant eu le mérite de mettre au point, après de longues et intenses recherches, un procédé permettant de désactiver des retardateurs de flamme bromés aromatiques, tels que les polybromobiphényles (PBB), polybromodiphényléthers (PBDE), polybromodiphényléthanes, éthylènebis(polybromophthalimides) contenus dans des matériaux plastiques sans utilisation de solvant.

Un objet de la présente invention est donc un procédé de désactivation de composés bromés contenus dans des matériaux plastiques selon la revendication 1, dans lequel on soumet un broyat d'au moins un matériau plastique contenant au moins un composé bromé à une irradiation UV en utilisant une ou plusieurs sources UV artificielles et dans lequel le ou les composés bromés sont choisis dans le groupe constitué par les retardateurs de flammes bromés aromatiques, notamment les polybromodiphényles, les polybromodiphényléthers, les polybromodiphényléthanes, les éthylènebis(polybromophthalimides) et leurs mélanges, plus particulièrement les polybromodiphényles, les polybromodiphényléthers et leurs mélanges.

Le procédé de l'invention peut être appliqué à tout type de matériau plastique, notamment aux thermoplastiques tels que le polystyrène, les copolymères styréniques, les polyoléfines, les polyamides, les polycarbonates, les polyuréthanes et le polychlorure de vinyle.

Des exemples non limitatifs de copolymères styréniques comprennent l'acrylonitrile butadiène styrène (ABS), le styrène butadiène (SBS), le styrène-acrylonitrile (SAN), l'acrylonitrile-styrène-acrylate (ASA) ainsi que les polyesters insaturés (PS), l'ABS étant préféré.

Des exemples non limitatifs de polyoléfines thermoplastiques comprennent le polypropylène (PP), le polyméthylpentène (PMP), le polybutène-1 (PB-1), le polyoxyméthylène (POM), notamment les copolymères à base d'éthylène.

Des exemples non limitatifs de polyamides comprennent le polyhexaméthylène adipamide (PA-66), polycaprolactame (polyamide-6, PA6), le polycaprolactame (polyamide- 6, PA6) étant préféré.

Des exemples non limitatifs de polycarbonates comprennent surtout le polycarbonate de bisphénole A.

Le procédé selon l'invention peut être appliqué à un matériau plastique seul ou à un mélange de différents matériaux plastiques.

Les polybromobiphényles (PBB) répondent à la formule générale (I) 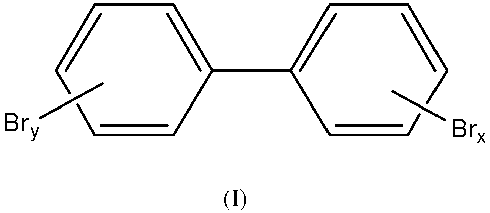 dans laquelle x et y sont indépendamment l'un de l'autre un nombre entier de 1 à 5. De préférence x et y sont tous les deux 3 (hexabromobiphenyle), 4 (octabromobiphenyle) ou 5 (décabromobiphenyle).

Les polybromodiphényléthers (PBDE) répondent à la formule générale (II) 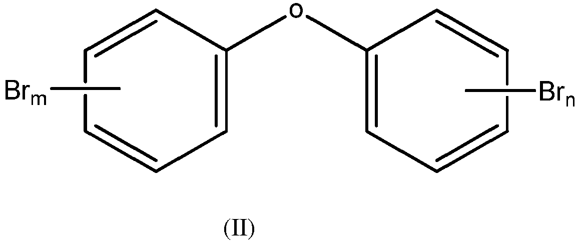 dans laquelle m et n sont indépendamment l'un de l'autre un nombre entier de 1 à 5. De préférence m et n sont tous les deux 4 (octabromodiphényléther) ou 5 (décabromodiphényléther).

Les polybromodiphényléthanes répondent à la formule générale (III) 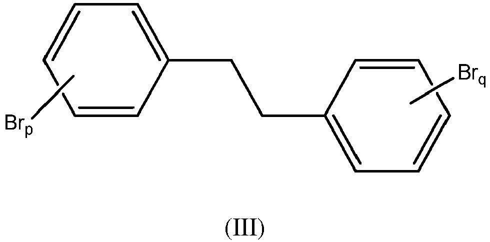 dans laquelle p et q sont indépendamment l'un de l'autre un nombre entier de 1 à 5. De préférence p et q sont tous les deux 5 (décabromodiphényléthane).

Les éthylènebis(polybromophthalimides) répondent à la formule générale (IV) 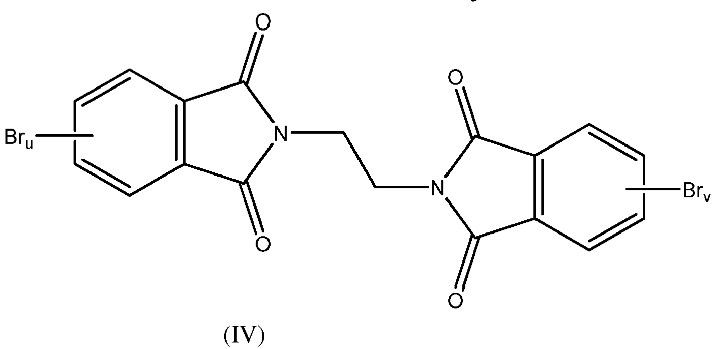 dans laquelle u et v sont indépendamment l'un de l'autre un nombre entier de 1 à 4. De préférence p et q sont tous les deux 4 (éthylènebis(tétrabromophthalimide)).

Aussi, dans un mode de réalisation, le ou les composés bromés sont choisis dans le groupe constitué par le hexabromobiphenyle, l'octabromobiphenyle, le décabromobiphenyle le décabromodiphényléther, l'octabromodiphényléther, le décabromodiphényléthane, l'éthylènebis(tétrabromophthalimide) et leurs mélanges, de préférence dans le groupe constitué par le décabromobiphenyle, le décabromodiphényléther, l'octabromodiphényléther, le décabromodiphényléthane, l'éthylènebis(tétrabromophthalimide) et leurs mélanges, de préférence encore dans le groupe constitué par le décabromobiphenyle, le décabromodiphényléther et l'octabromodiphényléther.

L'irradiation UV-visible est avantageusement effectuée dans une plage de longueurs d'ondes allant de 200 nm à 800 nm, de préférence de 280 nm à 600 nm (UVA/UVB/visible), et plus préférentiellement de 300 nm à 600 nm. A cet effet, on peut utiliser un seul type de source UV-visible ou différents types de sources UV-visible. L'utilisation de plusieurs sources lumineuses permet d'élargir le spectre de longueurs d'ondes et donc de disposer des énergies nécessaires pour couper différents types de liaisons soit dans une même molécule soit dans différentes molécules aromatiques bromées, telles que des polybromodiphényles, polybromodiphényléthers, polybromodiphényléthanes et/ou les éthylènebis(polybromophthalimides).

La taille des particules de broyat est un paramètre important en ce qui concerne l'efficacité du procédé selon l'invention. Plus les particules sont petites plus les rayons UV-visible peuvent atteindre les composés bromés à traiter. Ainsi, le broyat présente un diamètre moyen de particules inférieur ou égal à 2 mm, de préférence entre 75 µm et 2 mm, plus préférentiellement entre 1 mm et 2 mm et plus préférentiellement encore entre 0,5 mm et 2 mm. Les dimensions du broyat ont été mesurées à l'aide des observations effectuées par la microscopie optique. En ce qui concerne des dimensions dépassant un millimètre, les mesures ont été effectuées par une règle.

De manière avantageuse, le matériau plastique broyé est disposé en une fine couche lors de l'étape d'irradiation UV-visible. Cette couche est avantageusement la plus mince possible. Il a en effet été trouvé que plus la couche de broyat est mince, et la surface de broyat envers la source d'irradiation est importante, plus le traitement par irradiation est efficace. On préférera donc de disposer le broyat en monocouche. On entend par le terme « monocouche » au sens de la présente invention que les particules ne sont essentiellement pas superposées les unes aux autres.

L'efficacité de l'irradiation UV-visible peut être améliorée en mettant le broyat en mouvement afin de faire varier la surface du broyat exposée à l'irradiation UV-visible. Ceci peut par exemple être effectué en utilisant une bande de transport vibrant ou un lit fluidisé.

La variation de plusieurs paramètres permet d'augmenter l'efficacité de l'irradiation UV-visible. Ces paramètres sont notamment la puissance énergétique de la source et l'intensité lumineuse du rayonnement, la distance entre la source UV-visible et le broyat ainsi que le temps d'exposition au rayonnement.

L'intensité lumineuse de la ou des sources UV-visible est un facteur important qui influence l'efficacité du traitement UV-visible. L'intensité lumineuse fournie par la ou les sources UV-visible doit être suffisamment élevée pour dépasser l'énergie de la ou des liaisons chimiques à couper.

La distance entre la ou les sources UV-visible et le broyat est un autre facteur qui influence l'efficacité du procédé de l'invention. D'une manière générale on peut dire que plus la distance est faible plus le traitement d'irradiation est efficace. Toutefois, si la distance entre la ou les sources UV-visible et le broyat est trop faible, il y a un risque de dégradation du matériau plastique. Ainsi, la distance entre la ou les sources UV-visible et le broyat est choisie de façon à permettre une désactivation efficace des composés bromés tout en évitant toute dégradation du matériau plastique. Avantageusement, la distance entre la ou les sources UV-visible et le broyat est de 1 cm à 3 cm, de préférence de 1,5 cm à 3 cm et plus préférentiellement encore de 1,5 cm à 2 cm.

Dans les conditions citées ci-dessus, le temps d'exposition du matériau plastique broyé au rayonnement UV-visible est avantageusement entre 5 min et 120 min, de préférence de 15 min à 60 min et plus préférentiellement de 15 min à 30 min.

Dans un mode de réalisation, tout ou partie du matériau plastique broyé est, après l'irradiation UV-visible, recyclé pour être de nouveau soumis à une telle irradiation UV-visible. Dans une variante de ce mode de réalisation, le matériau plastique recyclé est mélangé avec du matériau plastique broyé pas encore irradié puis soumis à l'irradiation UV-visible.

Une installation de désactivation de composés bromés contenus dans un matériau plastique, est décrite comprenant des moyens de transport d'un broyat d'au moins un matériau plastique contenant au moins un composé bromé apte à acheminer ledit broyat vers et le transporter à travers une zone d'irradiation UV-visible, comprenant une ou plusieurs sources UV-visible.

L'invention sera maintenant illustrée par les exemples non limitatifs suivants.

Les figures annexées sont données pour illustrer les résultats des exemples.
- La figure 1A montre les spectres Infra Rouge à Transformée de Fourier (IRTF) de l'ABS, du Décabromodiphényléther (DBDE) et de l'Octabromodiphényléther (OBDE) dans la gamme de nombre d'ondes comprise entre 1200 cm⁻¹ et 1700 cm⁻¹,
- La figure 1B montre les spectres IRTF de l'ABS, du DBDE et de l'OBDE de 400 cm⁻¹ à 1200 cm⁻¹,
- La figure 2A montre l'évolution spectrale (IRTF) de l'ABS entre 930 cm⁻¹ et 1030 cm⁻¹, avant et après l'irradiation UV-visible.
- La figure 2B montre l'évolution spectrale (IRTF) de l'ABS entre 2200 cm⁻¹ et 2270 cm⁻¹, avant et après l'irradiation UV-visible.
- La figure 3A montre l'évolution spectrale (IRTF) de l'ABS chargé en DBDE (30% en poids) entre 1300 cm⁻¹ et 1460 cm⁻¹, avant et après l'irradiation UV-visible.
- La figure 3B montre l'évolution spectrale (IRTF) de l'ABS chargé en DBDE (30% en poids) entre 1234 cm⁻¹ et 1250 cm⁻¹, avant et après l'irradiation UV-visible.
- La figure 4A montre l'évolution spectrale de l'ABS (IRTF) chargé en DBDE (20% en poids) entre 1300 cm⁻¹ et 1440 cm⁻¹, avant et après l'irradiation UV-visible.
- La figure 4B montre l'évolution spectrale de l'ABS (IRTF) chargé en DBDE (20% en poids) entre 1230 cm⁻¹ et 1250 cm⁻¹, avant et après l'irradiation UV-visible.
- La figure 5 montre l'évolution spectrale de l'ABS (IRTF) chargé en OBDE (30% en poids) entre 1200 cm⁻¹ et 1800 cm⁻¹, avant et après l'irradiation UV-visible.
- La figure 6A montre l'évolution spectrale (IRTF) de l'ABS chargé en DBDE (30% en poids) entre 850 cm⁻¹ et 1000 cm⁻¹, avant et après l'irradiation UV-visible.
- La figure 6B montre l'évolution spectrale (IRTF) de l'ABS chargé en DBDE (30% en poids) entre 1000 cm⁻¹ et 1400 cm⁻¹, avant et après l'irradiation UV-visible.
- La figure 7A montre l'évolution spectrale (IRTF) de l'ABS chargé en OBDE (30% en poids) entre 725 cm⁻¹ et 750 cm⁻¹, avant et après l'irradiation UV-visible.
- La figure 7B montre l'évolution spectrale (IRTF) de l'ABS chargé en OBDE (30% en poids) entre 1200 cm⁻¹ et 1300 cm⁻¹, avant et après l'irradiation UV-visible.
- La figure 8 montre l'évolution spectrale (IRTF) du PP chargé en DBDE (20% en poids) entre 475 cm⁻¹ et 4000 cm⁻¹, avant et après l'irradiation UV-visible.
- La figure 9A montre l'évolution spectrale (IRTF) du PP chargé en DBDE (20% en poids) entre 1290 cm⁻¹ et 1405 cm⁻¹, avant et après l'irradiation UV-visible.
- La figure 9B montre l'évolution spectrale (IRTF) du PP chargé en DBDE (20% en poids) entre 1405 cm⁻¹ et 1500 cm⁻¹, avant et après l'irradiation UV-visible.
- La figure 10 montre l'évolution spectrale (IRTF) du PC chargé en DBDE (20% en poids) entre 1310 cm⁻¹ et 1410 cm⁻¹, avant et après l'irradiation UV-visible.
- La figure 11 montre l'évolution spectrale (IRTF) du PA chargé en DBDE (20% en poids) entre 400 cm⁻¹ et 2400 cm⁻¹, avant et après l'irradiation UV-visible.
- La figure 12A montre les spectres IRTF de l'ABS non-chargé, du décabromodiphényléthane (DBDPE) et de l'éthylènebis(tétrabromophthalimide) (EBTPI) dans la gamme de nombre d'ondes comprise entre 450 cm⁻¹ et 1000 cm⁻¹,
- La figure 12B montre les spectres IRTF de l'ABS non-chargé, du décabromodiphényléthane (DBDPE) et de l'éthylènebis(tétrabromophthalimide) (EBTPI) dans la gamme de nombre d'ondes comprise entre 1000 cm⁻¹ et 2000 cm⁻¹,
- La figure 13A montre l'évolution spectrale (IRTF) de l'ABS chargé en DBDPE (30% en poids) entre 620 cm⁻¹ et 680 cm⁻¹, avant et après l'irradiation UV-visible.
- La figure 13B montre l'évolution spectrale (IRTF) de l'ABS chargé en DBDPE (30% en poids) entre 1100 cm⁻¹ et 1150 cm⁻¹, avant et après l'irradiation UV-visible.
- La figure 13C montre l'évolution spectrale (IRTF) de l'ABS chargé en DBDPE (30% en poids) entre 1200 cm⁻¹ et 1400 cm⁻¹, avant et après l'irradiation UV-visible.
- La figure 14A montre l'évolution spectrale (IRTF) de l'ABS chargé en EBPTI (30% en poids) entre 570 cm⁻¹ et 650 cm⁻¹, avant et après l'irradiation UV-visible.
- La figure 14B montre l'évolution spectrale (IRTF) de l'ABS chargé en EBPTI (30% en poids) entre 1220 cm⁻¹ et 1300 cm⁻¹, avant et après l'irradiation UV-visible.
- La figure 14C montre l'évolution spectrale (IRTF) de l'ABS chargé en EBPTI (30% en poids) entre 1740 cm⁻¹ et 1800 cm⁻¹, avant et après l'irradiation UV-visible.

### EXEMPLES

Différents types de plastiques contenant différents polybromobiphényles (PBB) ou polybromodiphényléthers (PBDE) ont été soumis au procédé de désactivation selon l'invention soit en laboratoire (exemples 2 à 6) ou sur un pilote industriel (exemple 7).

Pour les essais au laboratoire, une source UV-visible a été utilisée de type LC8 de la marque Hamamatsu de puissance 200 W, équipée par une fibre optique. La dose d'irradiation varie en fonction du temps d'exposition au rayonnement, de l'intensité réglable de cette source ainsi que de la distance source UV-vis/échantillon. L'échantillon est étalé de façon homogène sur une surface exposée au rayonnement UV-visible. La distance entre l'échantillon et la source UV-visible varie de 1,5 cm à 3 cm.

Au cours du traitement UV-visible des prélèvements ont été effectués afin de suivre l'évolution de la désactivation des dérivés bromés en fonction des conditions du traitement radiatif. La technique d'analyse principalement utilisée est la spectroscopie infrarouge à transformée de Fourier (IRTF). Les spectres IRTF ont été enregistrés dans le mode de transmission à température ambiante avec un appareil de type Perkin Elmer modèle 2000. Le nombre de balayages accumulés était de 16 avec une résolution spectrale de 4 cm⁻¹. La gamme spectrale étudiée s'étale entre 400 cm⁻¹ et 4000 cm⁻¹. L'étude porte sur des pastilles solides de diamètre approximatif d'un centimètre et d'une épaisseur d'un millimètre. Ces pastilles ont été élaborées en mélangeant environ 15 mg de l'échantillon à analyser, avec environ 100 mg de KBr préalablement séché dans une étuve à une température de 70°C. Pour préparer les pastilles, on utilise une pression de 8 bars pendant 5 min.

Un certain nombre d'autres caractérisations ont été effectuées à l'aide de différentes techniques expérimentales, en comparant l'état initial non-irradié à l'état de l'échantillon irradié. A titre d'exemple, les spectres UV-Visible ont été enregistrés entre 190 et 800nm sur un spectrophotomètre à double faisceaux de type Cary 100, piloté par le logiciel Cary Win UV. Les mesures ont été effectuées à température ambiante en utilisant des cuves de spectroscopie en quartz de géométrie rectangulaire de 1 mm d'épaisseur (Hellma). Les concentrations des solutions préparées dans le solvant Tétrahydrofurane (THF) sont de 3 mg/ml à 5 mg/ml.

Les échantillons présentent généralement un diamètre moyen de particule entre 90 µm et 2 mm (surface moyenne : 7225 µm² à 4 mm²) et sont disposés en monocouche. Le diamètre moyen des particules est déterminé par microscopie optique à l'aide d'une échelle calibrée et en utilisant le logiciel Image Pro de la société QImaging (Surrey, Canada) qui sert également à calculer la surface moyenne des particules.

### EXEMPLE 1 : Spectres UV-visible d'ABS, polypropylène (PP), polycarbonate (PC), polyamide (PA-66), décabromodiphényléther (DBPE), octabromodiphényléther (OBDE), décabromodiphényléthane (DBDPE), éthylènebis(tetrabromophthalimide (EBTPI)

Les spectres infra-rouges des différents matériaux plastiques ont été réalisés à partir d'échantillons broyés ayant un diamètre moyen entre 90 µm (pour les mélanges modèles) et 2 mm (pour les échantillons industriels).

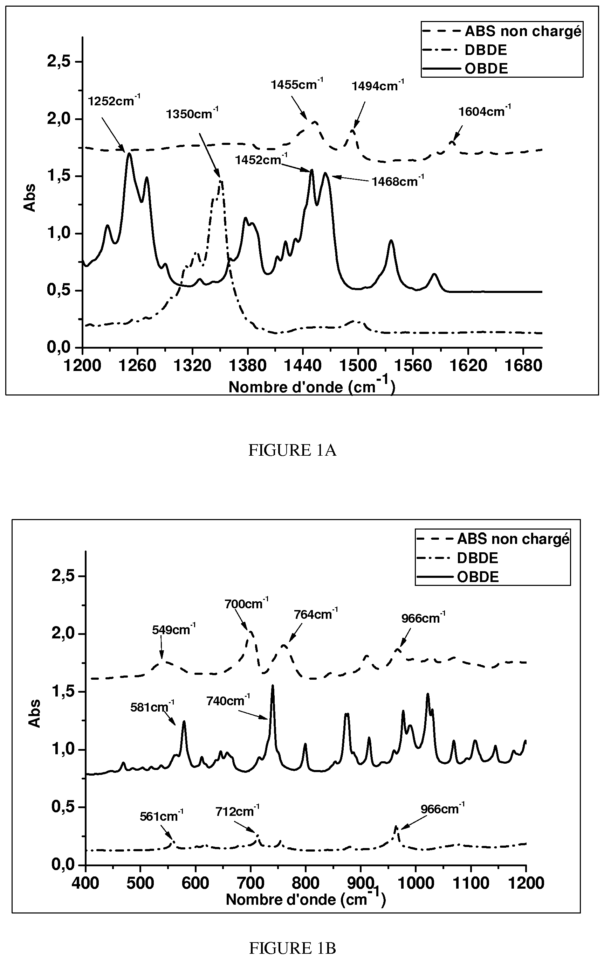

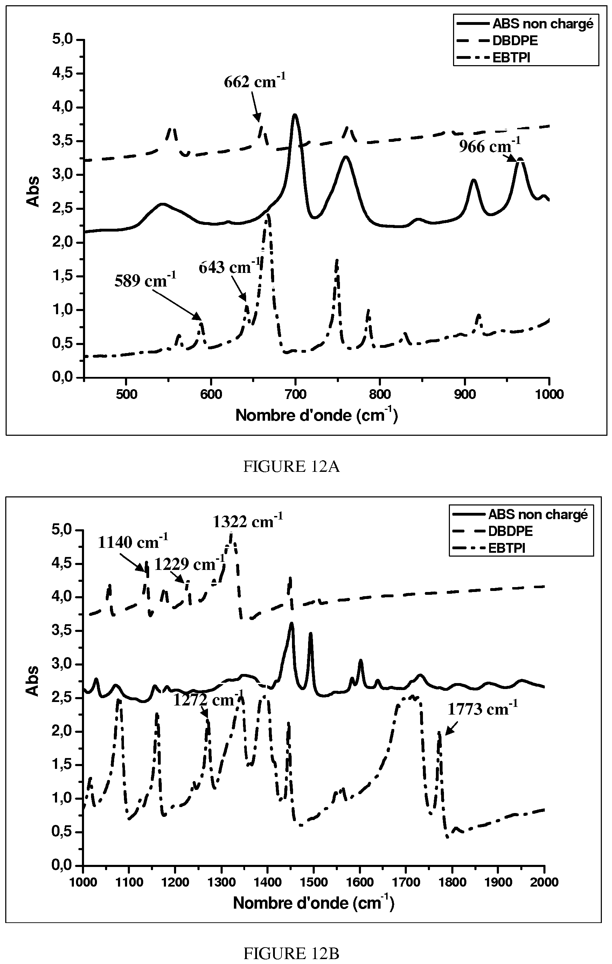

Les spectres infra-rouges de l'ABS, du DBPE, de l'OBPE, du DBDPE et de l'EBTPI sont représentés aux figures 1A, 1B, 12A et 12B.

### EXEMPLE 2 : Effet d'irradiation UV-visible sur de l'ABS contenant des PBDE

Les échantillons contenant de l'ABS suivants ont été traités avec le procédé de l'invention dans l'installation décrite ci-dessus :
- ABS sans retardateur de flammes (ABS vierge)
- ABS contenant 30% en poids de décabromodiphényléther (ABS 30% DBDE)
- ABS contenant 30% en poids de octabromodiphényléther (ABS 30% OBDE)
- ABS contenant 20% en poids de décabromodiphényléther (ABS 20% DBDE)

Tous les échantillons présentent un diamètre moyen de particule entre 90 µm et 2 mm (surfacemoyenne : 7225 µm² à 4 mm²) et sont disposés en monocouche.

Le tableau 1 ci-dessous récapitule les conditions expérimentales d'une première série d'essais.

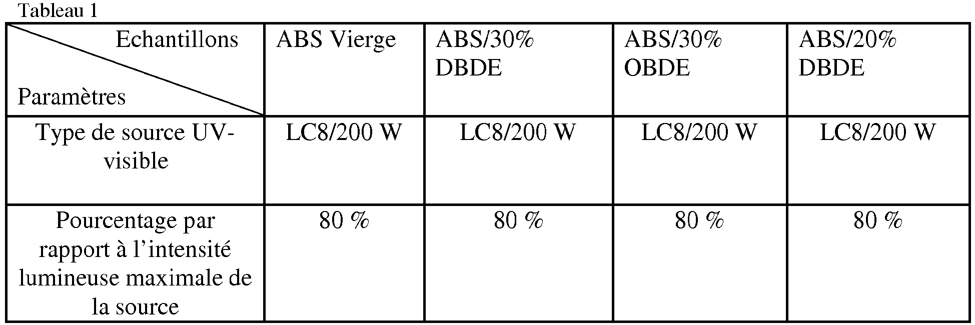

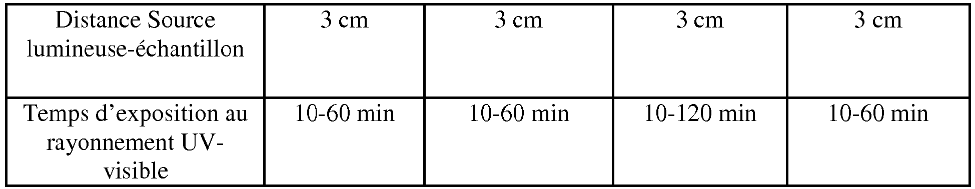

Les spectres IRTF sont suivis principalement au niveau des bandes caractéristiques de l'ABS (935 cm⁻¹ -2260 cm⁻¹), du DBDE (1200 cm⁻¹ - 1350 cm⁻¹) et de l'OBDE (1200 cm⁻¹ - 1300 cm⁻¹).

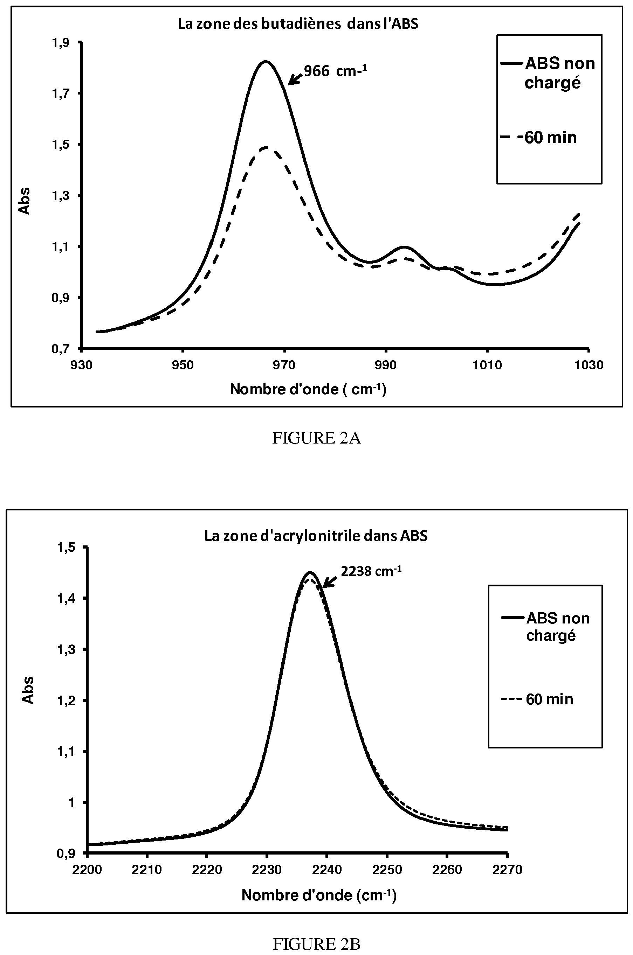

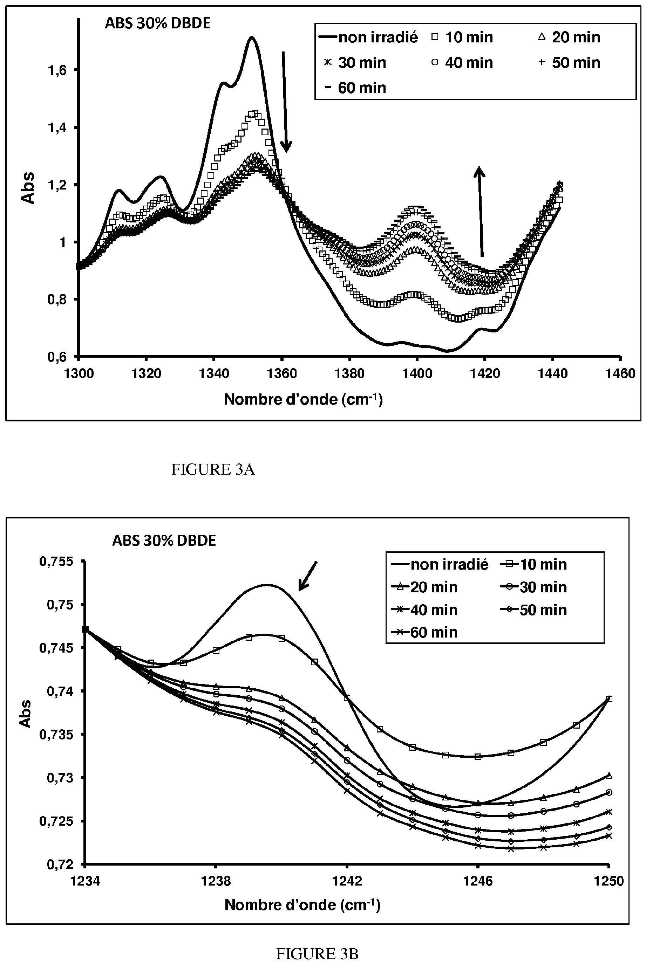

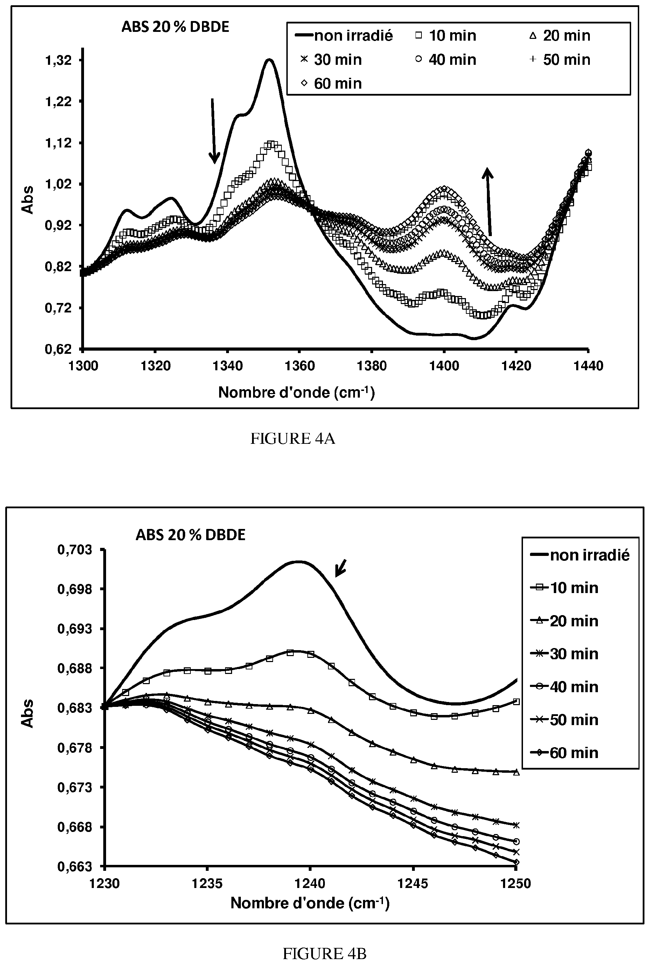

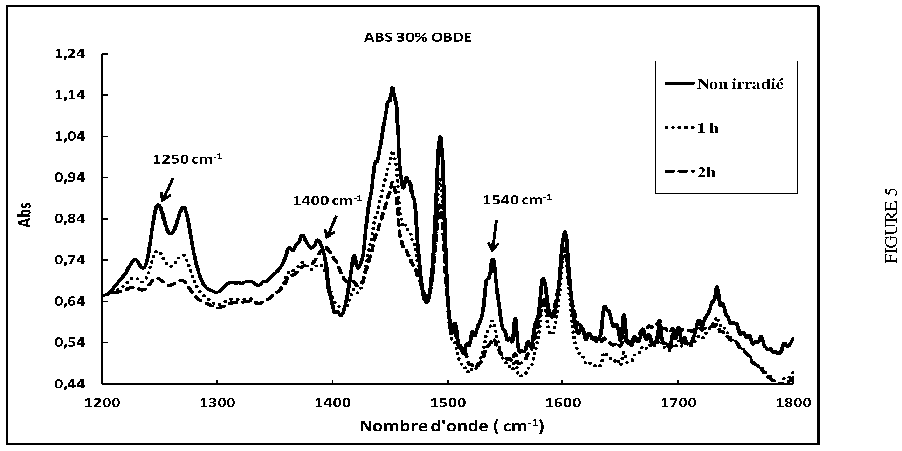

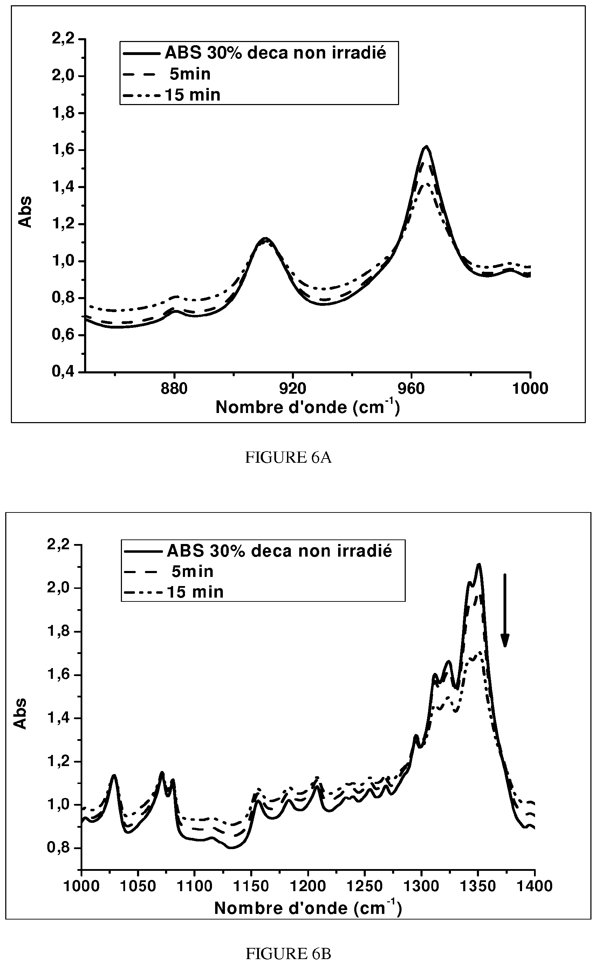

On constate que l'effet radiatif sur l'ABS vierge, c'est-à-dire sans présence d'un retardateur de flammes, est relativement faible (figures 2A et 2B). Par contre, l'effet est considérable lorsque l'ABS contient 30% de DBDE (figures 3A, 3B et 6), et 20% de DBDE (figures 4A et 4B). Pour le DBDE, on constate en effet la photodégradation du groupement éther avec la quasi-disparition de la bande à 1240 cm⁻¹ ainsi que la diminution de la bande à 1350 cm⁻¹ en faveur de l'apparition d'une bande à 1400 cm⁻¹. Pour l'OBDE, on constate également la photodégradation du groupement éther avec la quasi-disparition de la bande à 1252 cm⁻¹ ainsi que la diminution de plusieurs bandes entre 1400 cm⁻¹ et 1600 cm⁻¹ (figure 5).

Dans une deuxième série d'essais des mélanges comportant du ABS/30% DBDE et du ABS/30% OBDE ont été traités dans les conditions détaillées dans le tableau 2.

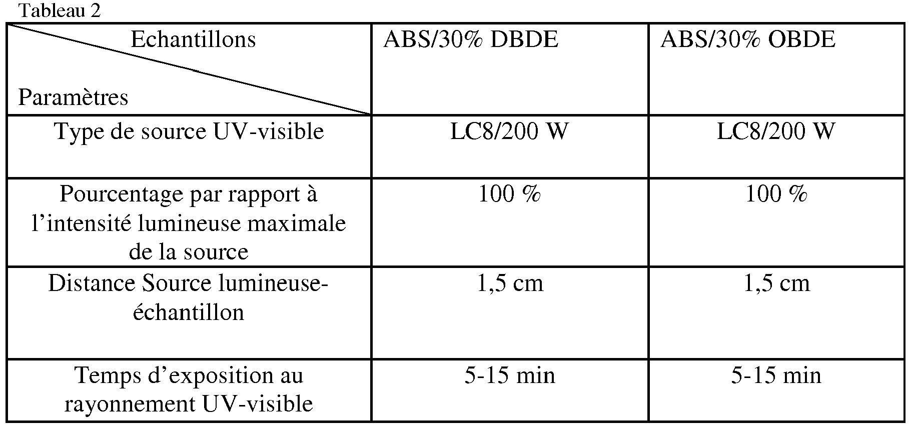

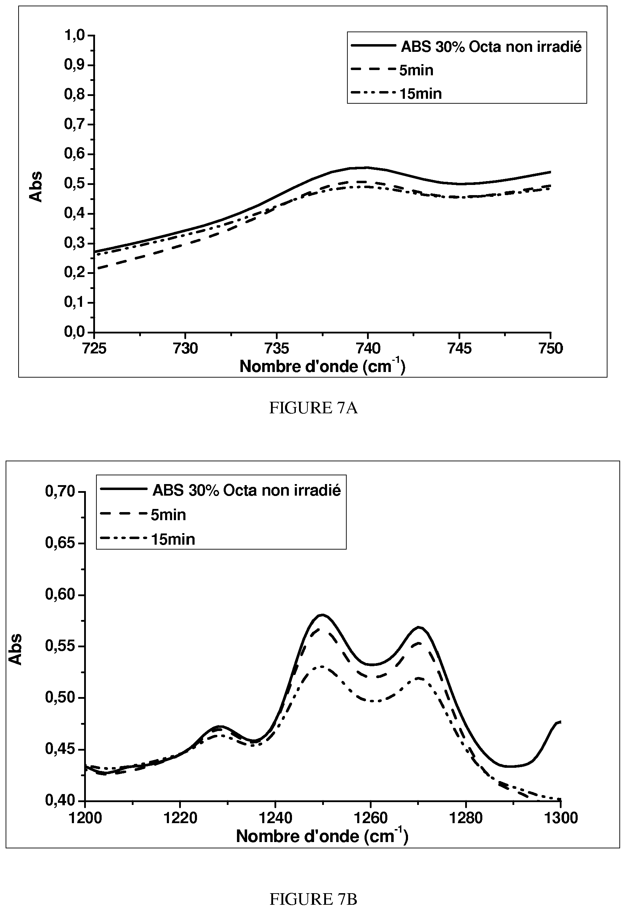

Pour chacun des échantillons, les spectres IRTF montrent une forte diminution des bandes dans la zone caractéristique de la fonction éther (figures 6A et 6B : pour l'ABS/30% DBDE ; figures 7A et 7B pour l'ABS/30% OBDE). On constate ainsi la photodégradation du groupement éther.

Le procédé de l'invention permet donc de désactiver les polybromodiphényléthers contenus dans l'ABS par photodégradation, notamment du groupement éther.

### EXEMPLE 3 : Effet d'irradiation UV-visible sur de l'ABS contenant d'autres molécules

### aromatiques polybromées

Les échantillons contenant de l'ABS suivants ont été traités avec le procédé de l'invention dans l'installation décrite ci-dessus :
- ABS sans retardateur de flammes (ABS vierge)
- ABS contenant 30% en poids de Décabromodiphényléthane (ABS 30% DBDPE)
- ABS contenant 30% en poids de Ethylènebis(tetrabromophthalimide (ABS 30% EBTPI)

Tous les échantillons présentent un diamètre moyen de particule entre 90 µm et 2 mm (surface moyenne : 7225 µm² à 4 mm²) et sont disposés en monocouche.

Le tableau 3 ci-dessous récapitule les conditions expérimentales d'une première série d'essais.

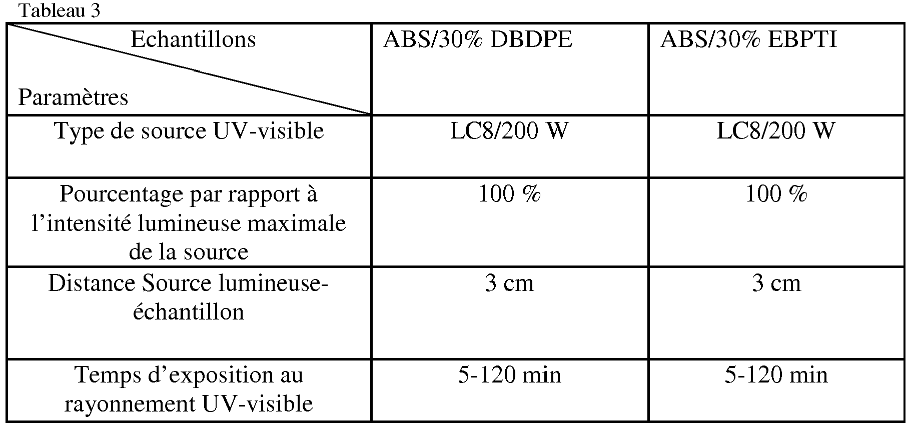

Les spectres IRTF sont suivis principalement au niveau des bandes caractéristiques de l'ABS (935 cm⁻¹ -2260 cm⁻¹), du DBDPE (640 cm⁻¹ - 1400 cm⁻¹) et de l'EBPTI (570 cm⁻¹ - 1800 cm⁻¹).

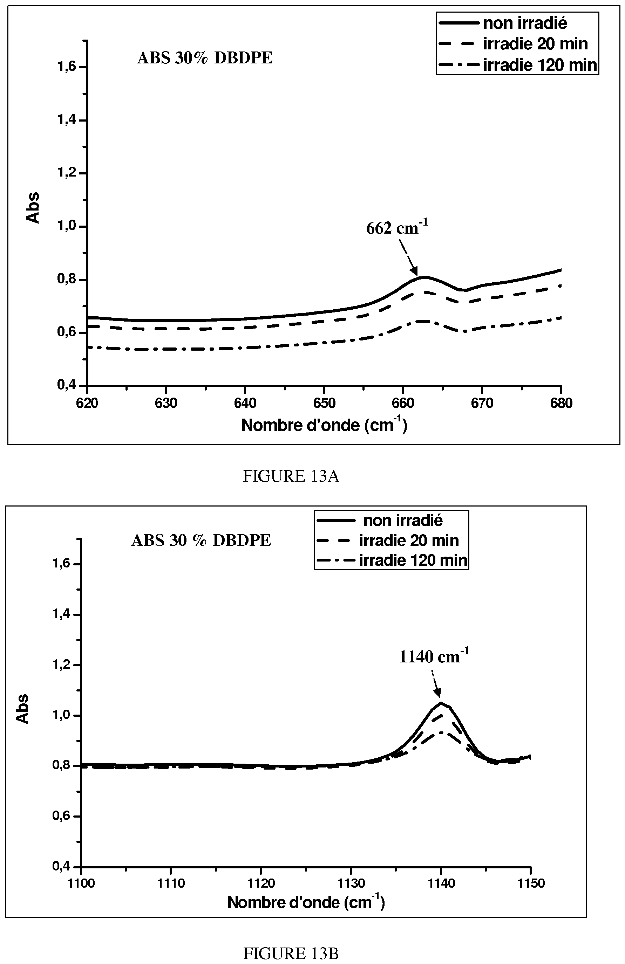

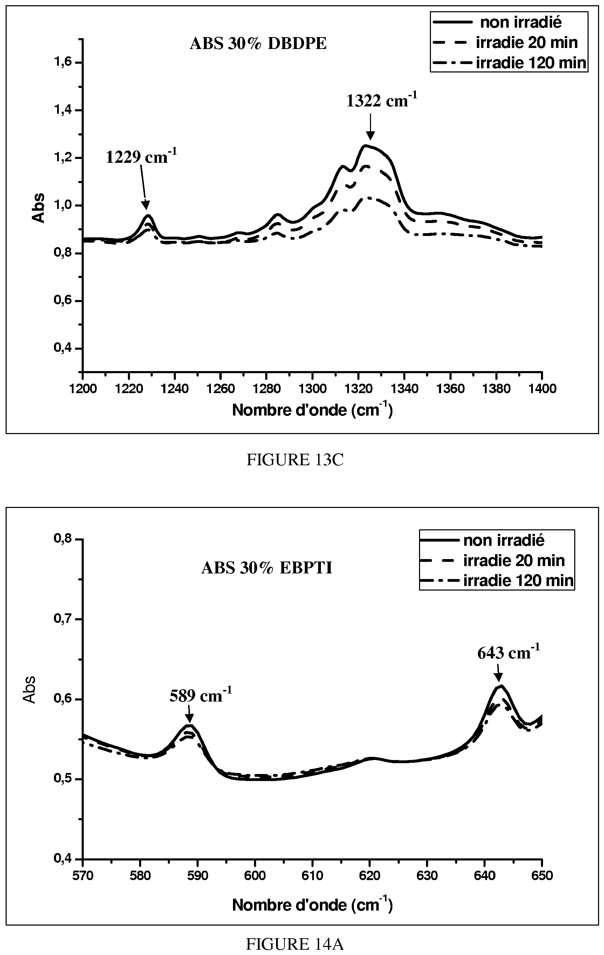

On constate un effet considérable de l'irradiation UV-visible sur l'ABS contenant du DBDPE. On constate en effet la photodégradation du groupement C-Br avec la diminution d'une bande entre 620 cm⁻¹ et 680 cm⁻¹ (figure 13A), ainsi que la diminution des bandes entre 1100 cm⁻¹ et 1150 cm⁻¹ (figure 13B) et entre 1200 cm⁻¹ et 1400 cm⁻¹ (figure 13C). En particulier, on constate la diminution de la bande à 1140 cm⁻¹ (figure 13B), qui correspond au groupement C-C (liaison singulière); on constate également la diminution des bandes à 1229 cm⁻¹ et 1322 cm⁻¹ (figure 13C), qui correspondent respectivement aux groupements C-C (éthane) et C-C (entre éthane et aromate).

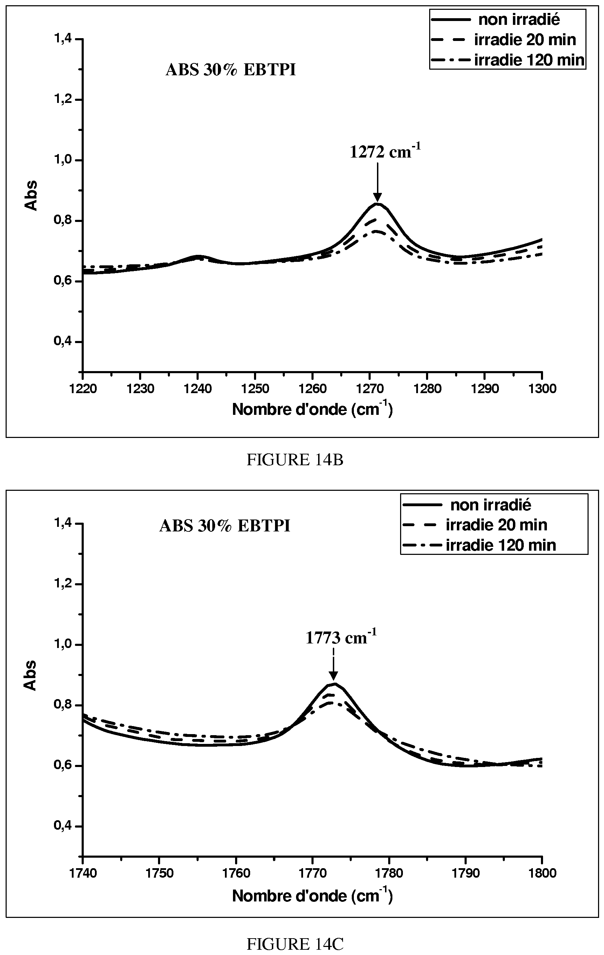

On constate également un effet considérable de l'irradiation UV-visible sur l'ABS contenant du EBPTI. On constate en effet la photodégradation du groupement C-Br avec la diminution des bandes entre 570 cm⁻¹ et 650 cm⁻¹ (figure 14A), ainsi que la diminution des bandes entre 1220 cm⁻¹ et 1300 cm⁻¹ (figure 14B) et entre 1740 cm⁻¹ et 1800 cm⁻¹ (figure 14C). En particulier, on constate la diminution de la bande à 1272 cm⁻¹ (figure 14B), qui correspond au groupement C-N (entre éthane et aromate); on constate également la diminution de la bande à 1773 cm⁻¹ (figure 14C), qui correspond au groupement C=O.

### EXEMPLE 4 : Effet d'irradiation UV-visible sur du polypropylène (PP) contenant du DBDE

Les échantillons contenant du polypropylène suivant ont été traités avec le procédé de l'invention dans l'installation décrite ci-dessus :
- PP sans retardateur de flammes (PP vierge),
- PP contenant 20% en poids de décabromodiphényléther (PP/20% DBDE).

Tous les échantillons présentent un diamètre moyen de particule de 90 µm à et 100 µm, et sont disposés en monocouche.

Le tableau 4 ci-dessous récapitule les conditions expérimentales d'une première série d'essais.

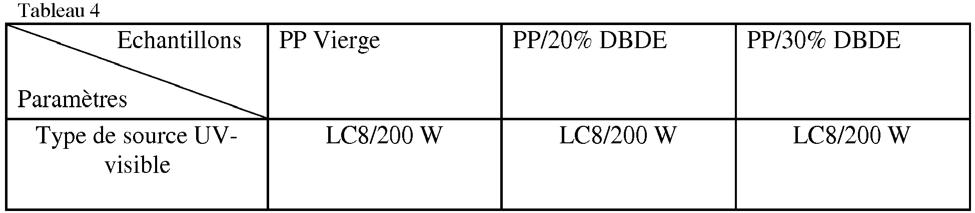

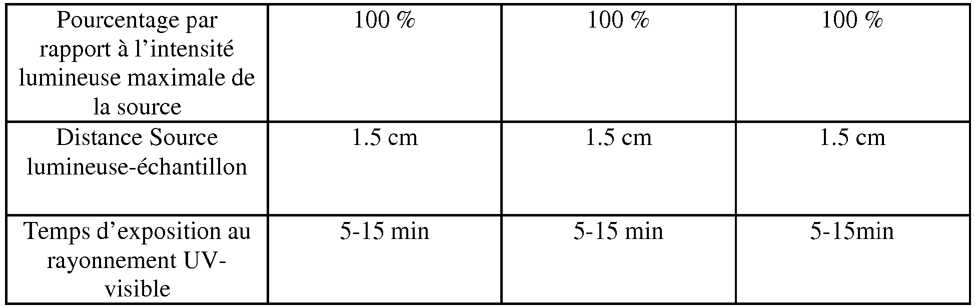

Les spectres IRTF sont suivis principalement au niveau des bandes caractéristiques du PP (545 cm⁻¹- 2800 cm⁻¹) et surtout du DBDE (1200 cm⁻¹ -1350 cm⁻¹).

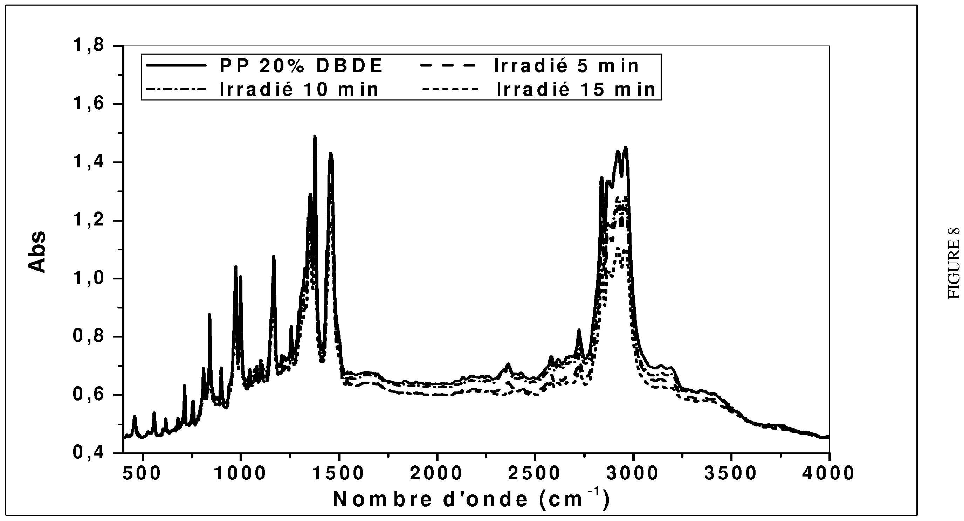

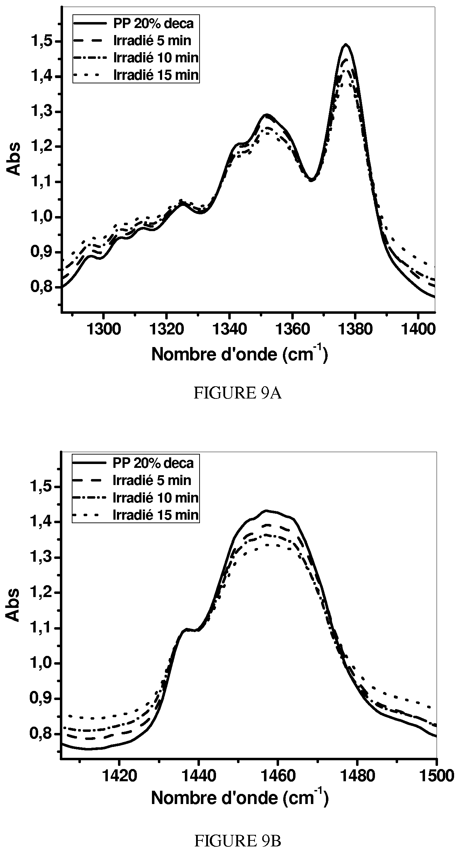

On constate un effet considérable de l'irradiation UV-visible sur le PP contenant du DBDE. On constate en effet la photodégradation du groupement éther avec la diminution des bandes entre 1250 cm⁻¹ et 1500 cm⁻¹ ainsi que la diminution des bandes entre 2750 cm⁻¹ et 3100 cm⁻¹ (figures 8 et 9). Par contre, l'effet radiatif sur le PP vierge (non représenté aux figures), c'est-à-dire sans présence d'un retardateur de flammes, est relativement faible.

### EXEMPLE 5 : Effet d'irradiation UV-visible sur du polycarbonate contenant du DBDE.

Les échantillons contenant du polycarbonate (PC) suivants ont été traités avec le procédé de l'invention dans l'installation décrite ci-dessus :
- PC sans retardateur de flammes (PC vierge)
- PC contenant 20% en poids de décabromodiphényléther (PC/20% DBDE) Tous les échantillons présentent une granulométrie/diamètre moyen de particule de 90 µm à 100 µm et sont disposés en monocouche.

Le tableau 5 ci-dessous récapitule les conditions expérimentales d'une première série d'essais.

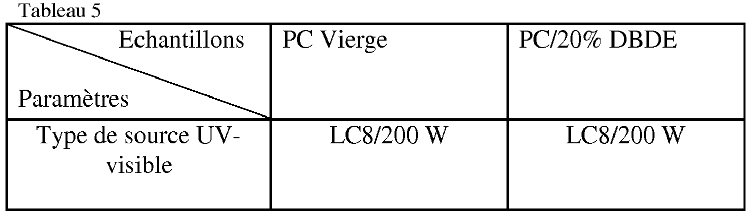

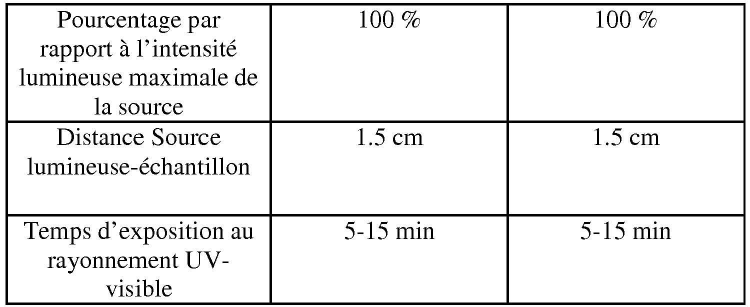

Les spectres IRTF sont suivis principalement au niveau des bandes caractéristiques du PC (700 cm⁻¹-3200 cm⁻¹) et surtout du DBDE (1200 cm⁻¹ -1350 cm⁻¹).

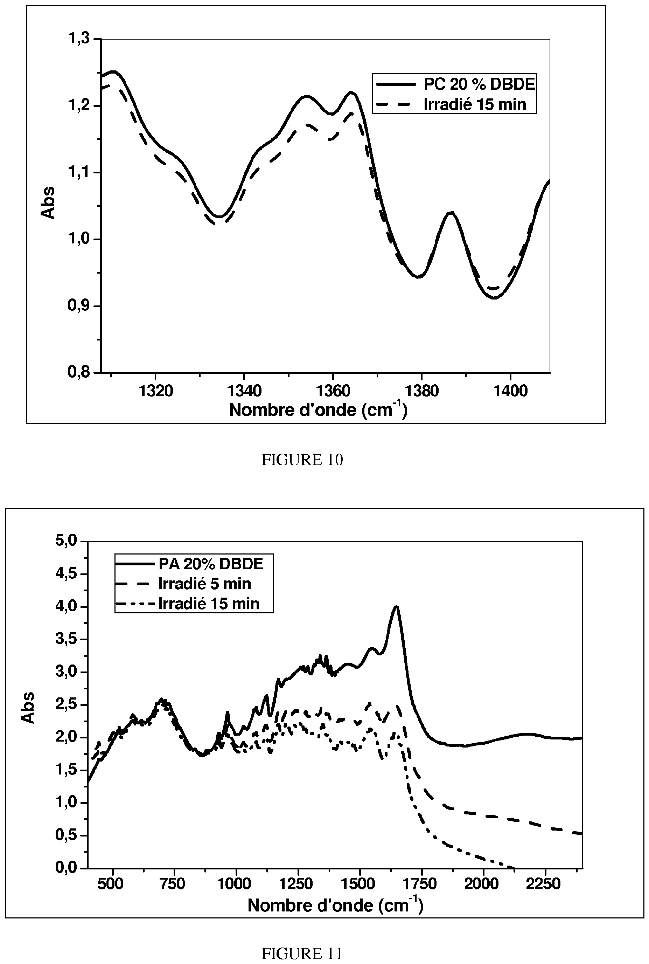

On constate dans la figure 10 un effet considérable de l'irradiation UV sur le PC contenant du DBDE. Par contre, l'effet radiatif sur le PC vierge (non représenté à la figure), c'est-à-dire sans présence d'un retardateur de flammes, est relativement faible.

### EXEMPLE 6 : Effet d'irradiation UV-visible sur du polyamide contenant du DBDE

Les échantillons contenant du polyamide-66 (PA-66) suivants ont été traités avec le procédé de l'invention dans l'installation décrite ci-dessus :
- PA-66 sans retardateur de flammes (PA-66 vierge)
- PA-66 contenant 20% en poids de décabromodiphényléther (PA-66/20% DBDE)

Tous les échantillons présentent un diamètre moyen de particule de 90 µm à 100 µm et sont disposés en monocouche.

Le tableau 6 ci-dessous récapitule les conditions expérimentales d'une première série d'essais.

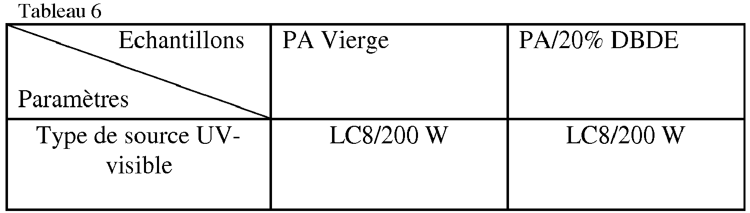

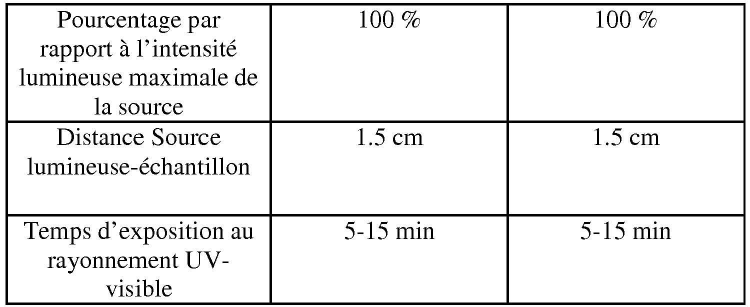

Les spectres IRTF sont suivis principalement au niveau des bandes caractéristiques du PA (405 cm⁻¹-3200 cm⁻¹) et surtout du DBDE (1200 cm⁻¹-1350 cm⁻¹ et 900 cm⁻¹-1050 cm⁻¹).

On constate dans la zone 900 cm⁻¹ -1050 cm⁻¹, une diminution importante de l'absorbance de la bande caractéristique du DBDE (zone des benzènes substitués C-H, C-Br). On constate également une légère diminution des bandes de la gamme 1200 cm⁻¹ -1350cm⁻¹ en faveur d'apparition d'autres. (figure 11). Par contre, l'effet radiatif sur le PA vierge (non représenté à la figure), c'est-à-dire sans présence d'un retardateur de flammes, est relativement faible.

### EXEMPLE 7 : Pilote industriel

Des essais de désactivation de composés bromés contenus dans des matériaux plastiques par irradiation UV-visible ont été réalisés dans un pilote industriel. Ici, l'irradiation UV-visible a été effectuée dans un tunnel d'une largeur d'environ 40 cm, équipée de 3 sources lumineuses UV-visible couvrant une gamme de longueurs d'onde de 190 nm à 700 nm (domaine UVA/UVB/visible). Ce tunnel est traversé par un tapis de transport couvert d'un matériel résistant au rayonnement UV-visible. Les échantillons à irradier ont été étalés sur le tapis de transport. Un dispositif est installé, permettant de changer continuellement la surface des échantillons pour que les effets d'irradiation soient répartis de façon homogène sur la surface totale. La distance entre les échantillons et le rayonnement peuvent être variés de façon continue entre 1 cm et plusieurs dizaines de cm.

Les résultats des essais réalisés sur des échantillons comparables à ceux des exemples 1 à 5 sont tout à fait équivalents en termes de désactivation des composés bromés à ceux obtenus en laboratoire.

L'ensemble des exemples ci-dessus démontrent que le procédé selon l'invention permet de désactiver efficacement du décabromodiphényléther,de l'octabromodiphényléther, du décabromodiphényléthane et de l'éthylènebis(tetrabromophthalimide) contenus dans des matériaux plastiques par photodégradation, notamment du groupement C-Br. Un effet équivalent est attendu pour d'autres composés bromés aromatiques, notamment des tels que notamment retardateurs de flamme bromés aromatiques, notamment des polybromodiphényléthers (PBDE), polybromobiphényles (PBB), polybromodiphényléthanes et éthylènebis(polybromophthalimides).

## Revendications

1. Procédé de désactivation de composés bromés contenus dans des matériaux plastiques, dans lequel on soumet un broyat d'au moins un matériau plastique contenant au moins un composé bromé à une irradiation UV-visible en utilisant une ou plusieurs sources UV-visible artificielles, ledit broyat présentant un diamètre moyen de particule inférieur ou égal à 2 mm, le ou les composés bromés sont choisis dans le groupe constitué par les retardateurs de flamme bromés aromatiques, et dans lequel le procédé s'effectue sans utilisation de solvant.

2. Procédé selon la revendication 1, dans lequel l'irradiation UV-visible est effectuée à des longueurs d'ondes de 200 nm à 700 nm (UVA/UVB/visible).

3. Procédé selon la revendication 1 ou 2, dans lequel le ou les matériaux plastiques sont choisis dans le groupe constitué du polystyrène, les copolymères styréniques, les polyoléfines, les polyamides, les polycarbonates, des polyuréthanes et du polychlorure de vinyle.

4. Procédé selon l'une quelconque des revendications précédentes, dans lequel le matériau plastique broyé est disposé en monocouche à l'irradiation UV-visible.

5. Procédé selon l'une quelconque des revendications précédentes, dans lequel le broyat est en mouvement durant l'irradiation UV-visible.

6. Procédé selon la revendication 4 ou la revendication 5 en combinaison avec la revendication 4, dans lequel la distance entre la ou les sources UV-visible et le broyat est de 1,5 cm à 3 cm.

7. Procédé selon l'une quelconque des revendications précédentes, dans lequel tout ou partie du matériau plastique broyé est, après l'irradiation UV-visible, recyclé pour être de nouveau soumis à une telle irradiation UV-visible.

8. Procédé selon la revendication précédente, dans lequel le matériau plastique recyclé est mélangé avec du broyat d'au moins un matériau plastique contenant au moins un composé bromé pas encore irradié puis soumis à l'irradiation UV-visible.

9. Procédé selon l'une quelconque des revendications précédentes, dans lequel le ou les retardateurs de flamme bromés aromatiques sont choisi dans le groupe constitué par les polybromodiphényles, les polybromodiphényléthers, les polybromodiphényléthanes et éthylènebis(polybromophthalimides) et leurs mélanges.

## Patentansprüche

1. Verfahren zur Deaktivierung von Bromverbindungen, die in Kunststoffen enthalten sind, bei dem zerkleinertes Material mindestens eines Kunststoffes, der mindestens eine Bromverbindung enthält, einer UV-sichtbaren Bestrahlung unterzogen wird, wobei eine oder mehrere künstliche UV-sichtbare Quellen verwendet werden, wobei das zerkleinerte Material einen durchschnittlichen Partikeldurchmesser kleiner oder gleich 2 mm aufweist, wobei die Bromverbindung(en) in der Gruppe ausgewählt sind, die von den aromatischen bromierten Flammschutzmitteln gebildet ist, wobei das Verfahren ohne Verwendung eines Lösungsmittels durchgeführt wird.

2. Verfahren nach Anspruch 1, bei dem die UV-sichtbare Bestrahlung bei Wellenlängen von 200 nm bis 700 nm (UVA/UVB/sichtbar) erfolgt.

3. Verfahren nach Anspruch 1 oder 2, bei dem der oder die Kunststoffe in der Gruppe ausgewählt sind, die von Polystyrol, den Styrol-Copolymeren, den Polyolefinen, den Polyamiden, den Polykarbonaten, den Polyurethanen und Polyvinylchlorid gebildet ist.

4. Verfahren nach einem der vorhergehenden Ansprüche, bei dem der zerkleinerte Kunststoff einschichtig der UV-sichtbaren Bestrahlung unterzogen wird.

5. Verfahren nach einem der vorhergehenden Ansprüche, bei dem das zerkleinerte Material während der UV-sichtbaren Bestrahlung in Bewegung ist.

6. Verfahren nach Anspruch 4 oder Anspruch 5 in Kombination mit Anspruch 4, bei dem der Abstand zwischen der oder den UV-sichtbaren Quellen und dem zerkleinerten Material 1,5 cm bis 3 cm beträgt.

7. Verfahren nach einem der vorhergehenden Ansprüche, bei dem die Gesamtheit oder ein Teil des zerkleinerten Kunststoffes nach der UV-sichtbaren Bestrahlung rezykliert wird, um wieder einer solchen UV-sichtbaren Bestrahlung unterzogen zu werden.

8. Verfahren nach dem vorhergehenden Anspruch, bei dem der rezyklierte Kunststoff mit zerkleinertem Material mindestens eines Kunststoffes gemischt wird, der mindestens eine Bromverbindung enthält, die noch nicht bestrahlt wurde, und dann der UV-sichtbaren Bestrahlung unterzogen wird.

9. Verfahren nach einem der vorhergehenden Ansprüche, bei dem das oder die aromatischen bromierten Flammschutzmittel in der Gruppe ausgewählt sind, die von den Polybromdiphenylen, den Polybromdiphenylethern, den Polybromdiphenylethanen und den Ethylenbis(polybromphthalimiden) und ihren Gemischen gebildet ist.

## Claims

1. A method for the deactivation of brominated compounds contained in plastic materials, wherein a homogenate of at least one plastic material containing at least one brominated compound is subjected to a UV-visible irradiation using one or more artificial UV-visible sources, said homogenate having an average particle diameter of 2 mm or less, the brominated compound or compounds are selected from the group consisting of aromatic brominated flame retardants, and wherein the method is performed without using any solvent.

2. The method according to Claim 1, wherein the UV-visible irradiation is carried out at wavelengths ranging from 200 nm to 700 nm (UVA/UVB/visible).

3. The method according to Claim 1 or 2, wherein the plastic material or materials are selected from the group consisting of polystyrene, styrenic copolymers, polyolefins, polyamides, polycarbonates, polyurethanes, and polyvinyl chloride.

4. The method according to any of the previous claims, wherein the ground plastic material is arranged in a single layer with the UV-visible irradiation.

5. The method according to any of the previous claims, wherein the homogenate is in motion during the UV-visible irradiation.

6. The method according to Claim 4 or Claim 5 in combination with Claim 4, wherein the distance between the UV-visible source or sources and the homogenate ranges from 1.5 cm to 3 cm.

7. The method according to any of the previous claims, wherein all or part of the ground plastic material is, after the UV-visible irradiation, recycled in order to be subjected again to such UV-visible irradiation.

8. The method according to the previous claim, wherein the recycled plastic material is mixed with the homogenate of at least one plastic material containing at least one brominated compound that has not yet been irradiated and then subjected to the UV-visible irradiation.

9. The method according to any of the previous claims, wherein the aromatic brominated flame retardant or retardants are selected from the group consisting of polybrominated diphenyls, polybrominated diphenyl ethers, polybrominated diphenylethanes, and ethylenebis (polybromophthalimides) and mixtures thereof.
